# EUROPEAN PATENT SPECIFICATION

(11) **EP 1 293 721 B1**
(45) Date of publication and mention of the grant of the patent: **11.08.2004**
(21) Application number: 02102354.4
(22) Date of filing: 12.09.2002
(51) Int. Cl.: F16L 59/16, F16L 55/115

(54) **End seal for insulated piping element**
Endverschluss für ein isoliertes Rohrelement
Embout obturateur pour element de tuyau isolé

(30) Priority: 17.09.2001 FI 20011824
(43) Date of publication of application: 19.03.2003
(73) Proprietor: Uponor Innovation AB, 513 81 Fristad (SE)
(72) Inventor: Rantalainen, Janne, 15540, Villähde (FI)
(74) Representative: Huhtanen, Ossi Jaakko

(56) References cited:
- DE-U- 29 911 245
- FR-A- 2 746 480
- US-A- 4 269 232
- US-A- 4 912 287
- US-B1- 6 291 043

## Description

### BACKGROUND OF THE INVENTION

The invention relates to an end cap for a piping element comprising at least one flow pipe, insulation arranged on the outside of the flow pipe and an outer layer arranged on the outside of the insulation, which end cap is to be placed to an end of the piping element, the end cap comprising a side wall to be arranged against the outer layer, a front surface to be arranged against the insulation and at least one sleeve in the front surface, through which sleeve the flow pipe is to be arranged.An example of such an end-cap is described in DE-U-29911245.

For example heat piping and household water supply are implemented using piping elements that include at least one flow pipe surrounded by insulation. The insulation is covered by a protective outer layer. The flow pipe is made of cross-linked polyethylene PEX, for example. In heat piping the flow pipe is provided with oxygen diffusion protection, which prevents oxygen from penetrating into the pipe system. The insulation may be made of cross-linked closed-cell polyethylene foam, for example. The outer layer forming the protective cover may be made of corrugated polyethylene, for example. Due to the corrugation, the outer layer is rigid in transverse direction but resilient in longitudinal direction.

An end of the piping element is provided with an end cap to prevent moisture from entering into the insulation layers of the piping element. The end cap comprises a portion that sets onto the outside of the outer layer, the portion containing glue mass, such as mastic, that melts upon heating. The end cap is further provided with sleeves through which the flow pipes are mounted. The sleeve seals around the flow pipe by the impact of an O-ring. The end caps are typically manufactured of heat-shrinkable cross-linked polyethylene.

The end cap is set in place before the flow pipes are mounted to their couplings. The end cap is drawn in place and heated by a gas flame at the outer layer of the piping element. This causes the outer rim of the end cap to shrink, and the glue inside the end cap melts and seals the end cap around the outer layer of the piping element. The heating of the end cap must be carried out with extreme care to ensure that the glue melts sufficiently but the outer layer of the piping element is not damaged. Further, to avoid damaging the O-ring seal around the flow pipe, the seal must not be heated too much. Open flame must be handled with caution and a fire-watch must be arranged at the working site after fire has been used. The end cap is relatively stiff and thus the flow pipe cannot move relative to the outer layer in a direction transverse to the axial direction, for example, or the moving of the flow pipe may damage the end cap or detach it from its place. Each flow pipe of a different size requires an end cap provided with a different sleeve.

It is an object of the invention to provide a novel and improved end cap for a piping element.

The end cap of the invention is characterized in that the end cap is made at least partly resilient

The invention is based on the idea that the front surface of the end cap is made resilient, by being provided with at least one bellows. According to a preferred embodiment, the portion setting against the outer layer of the end cap is provided with an inner bulge and the side portion of the end cap is made resilient to allow the bulge to be arranged into a corrugation groove of the corrugated outer layer of the piping element. According to a further preferred embodiment the sleeve is stepped to allow the end cap to be arranged in connection with flow pipes of different sizes by cutting the sleeve at a suitable point, depending on the outer diameter of the flow pipe.

An advantage of the invention is that it is easy to mount an end cap correctly, without damaging the piping element, and that the end of the piping element as a whole sustains pressure water. Due to the resilience of the front surface of the end cap, the end cap allows the flow pipe to move in a direction transverse to the axial direction even after the end cap has been installed. The bellows formed on the front surface of the end cap further improves the possibility to move the flow pipe in the transverse direction. By forming a bulge on the portion that sets against the outer layer of the end cap and by making the side portion of the end cap resilient to allow the bulge to be arranged into a corrugation groove of the corrugated outer layer, it is possible to ensure that the end cap seals against the outer layer. By providing the sleeve with steps it can be fitted tightly around flow pipes of different diameters. All in all the solution of the invention is safe to install because the end cap is put in place without handling open flame. Moreover, the installation event is relatively short because a fire-watch required after hot work operations, for example, is not needed.

The invention will be described in greater detail with reference to the accompanying drawing, in which
Figure 1 is a cross-sectional side view of an end cap mounted at the end of a piping element; and
Figure 2 is a front view of an end cap.

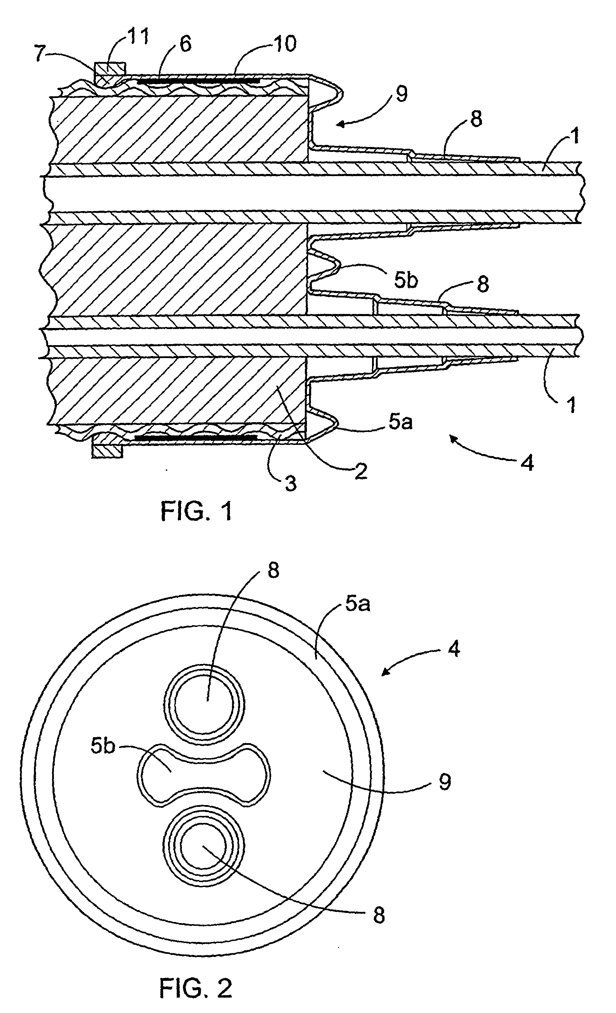

Figure 1 shows a piping element comprising two flow pipes 1. The flow pipe 1 is made of cross-linked polyethylene PEX, for example. In heat piping, the flow pipe can be provided with an oxygen diffusion protection by using ethyl-vinyl-alcohol EVOH, which prevents oxygen from diffusing into circulation water. On the outside of the flow pipes 1 there is provided insulation 2. The insulation 2 is made of cross-linked polyethylene foam PEX. The insulation 2 is of a closed-cell structure, which prevents water absorption. In addition, the insulation 2 recovers quickly from any changes in shape. The insulation 2 may be made of a plurality of pre-manufactured sealing material layers, for example, wrapped one on top of the other. On the outside of the insulation 2 there is an outer layer 3, which serves as a protective covering of the piping element. The outer layer 3 is made of corrugated polyethylene, for example. Due to the corrugation the outer layer 3 is rigid in transverse direction but flexible in longitudinal direction.

At an end of the piping element an end cap 4 is attached to prevent water from the outside from entering between the insulation layers and the outer layer. The front surface of the end cap 4, i.e. the surface that sets against the insulation 2, is made resilient by manufacturing it of a resilient material and providing it with at least one bellows. This allows the flow pipes 4 to move relative to one another or the outer layer 3, for example, in a direction transverse to the axial direction of the piping element. The flow pipes 1 can thus be turned and bent relatively easily, which facilitates the joining of the pipes. With the bellows 5a and 5b is meant that a pleat, or another formation other than a flat wall, is made on the front surface 9 of the end cap 4. The first bellows 5a is formed on the outer edge of the front surface 9 of the end cap 4, the first bellows 5a thus facilitating the moving of the flow pipes 1 relative to the outer layer 3. In Figure 1 there are two flow pipes 1 and a second bellows 5b arranged between them to facilitate the moving of the flow pipes 1 relative to one another. As stated, the insulation 2 is made of a resilient and elastic material and thus the insulation 2 does not essentially disturb the moving of the flow pipes 1 when they are joined.

Between the end cap 4 and the outer layer 3 there is arranged glue mass 6, such as mastic. The glue mass 6 seals the clearance between the side wall 10 of the end cap 4 and the outer layer 3. The end cap 4 may be provided with a bulge 7 formed on the inside of its side surface 10. In Figure 1 the bulge 7 is on the end part of the side wall of the end cap 4. The side wall 10 of the end cap 4 is also made of resilient material, thereby allowing the bulge 7 to be placed into a corrugation groove of the outer layer 3 by stretching the side wall 10 of the end cap 4, for example. The outer layer of the piping element can therefore be cut in principle at any point and, by utilizing the resilience of the side wall 10 of the end cap 4, the bulge 7 can be arranged into the corrugation groove. This further enhances the sealing between the end cap 4 and the outer layer 3. Further, it is possible to arrange a tightening band 11, a metal band for example, on the outside of the end cap 4, at the bulge 7, to tighten the end cap 4 against the outer layer 3. If the band 11 were arranged to press the outer layer 3 at the largest diameter of the layer corrugation, the corrugated polyethylene outer layer 3 might yield, which would damage the structure of the outer layer 3 and cause problems in the sealing. But now, as stated, the bulge 7 can be arranged into a corrugation groove of the outer layer 3, whereby the band 11 arranged at the bulge 7 tightens the outer layer 3 at the corrugation groove, i.e. at the smallest diameter, and thus there is no risk of damaging the corrugation of the outer layer 3.

The end cap 4 further comprises sleeves 8 through which the flow pipes 1 are mounted. The sleeves 8 are arranged to taper in steps, whereby they can be cut at a suitable point, depending on the diameter of the flow pipes 1. Figure 1, for example, illustrates a solution in which an upper sleeve 8 is meant for a pipe of a diameter of 32mm or 28mm. A lower sleeve 8, in turn, is designed for a pipe of a diameter of 32mm, 28mm or 18mm. At the end of each stepped portion of the sleeve 8 a line denoting the cutting line is formed. The pipe shown in Figure 1 is cut at the last cutting line, the upper flow pipe thus having a diameter of 28mm and the lower flow pipe 1 a diameter of 18mm. The sleeves 8 can be made closed in which case the end cap 4 may comprise more sleeves 8 than there are flow pipes 1 in the piping element. In that case only those sleeves 8 are opened through which a flow pipe 1 is to be drawn. If the end cap of Figure 1 had been arranged into a piping element having flow pipes the diameters of which are 32 and 28mm, the upper sleeve 8 would have been cut at about the middle, i.e. slightly to the left of the step, and the lower sleeve 8 near the rightmost step, at its left side. Consequently, only one end cap 4 needs to be manufactured for a plurality of different flow pipe cross-sections.

Further, the sleeves 8 are made conical, which means that they taper towards the end, i.e. towards the end at the right in Figure 1. At the front part of the conical part the inner diameter of the sleeve 8 is preferably slightly larger than the outer diameter of the flow pipe 1 to be mounted inside the sleeve. This facilitates the mounting of the flow pipe 1 through the sleeve 8. At the end part of the conical portion, the inner diameter of the sleeve 8 is smaller than the outer diameter of the flow pipe 1. Since the sleeves 8 are made of resilient material, they can be mounted onto the flow pipes and they seal extremely well against the flow pipe. Therefore no additional seal or sealing ring is needed between the sleeve 8 and the flow pipe 1. To secure the sealing between the sleeve 8 and the flow pipe 1, bulges or rings made of the same material as the wall structure of the sleeve 8 can be formed, when desired, on the inside of the sleeve to provide additional sealing. When desired, the inner surface of the sleeve 8 can also be formed such that it comprises ribs or other similar sealing members.

The drawings and the related specification are only meant to illustrate the idea of the invention. The details of the invention may vary within the scope of the claims. Most preferably, however, the end cap 4 is entirely made using a single resilient material and forms a uniform structure. The material of the end cap 4 may be any suitably resilient thermo-elastic material. An end cap 4 made entirely of ethylene/propylene/diene EPDM is preferred.

## Claims

1. An end cap for a piping element comprising at least one flow pipe (1), insulation (2) arranged on the outside of the flow pipe (1) and an outer layer (3) arranged on the outside of the insulation (2), which end cap (4) is to be placed to an end of the piping element, the end cap (4) comprising a side wall (10) to be arranged against the outer layer (3), a front surface (9) to be arranged against the insulation (2) and at least one sleeve (8) in the front surface (9), through which sleeve the flow pipe (1) is to be arranged, **characterized in that** at least one bellows (5a, 5b) is formed on the front surface (9) of the end cap (4) for making the front surface (9) resilient.

2. An end cap according to claim 1, **characterized in that** the end cap (4) comprises at least two sleeves (8) and between the sleeves (8) there is formed a bellows (5b).

3. An end cap according to claim 1 or 2, **characterized in that** at least one bellows (5a) is formed on the outer edge of the front surface (9) of the end cap (4).

4. An end cap according to any one of the preceding claims, **characterized in that** a bulge (7) is formed on the inner surface of the side wall (10) of the end cap (4), the end cap being designed for use in connection with a piping element provided with a corrugated outer layer (3) and the side wall (10) being made resilient to allow the bulge (7) to be arranged into a corrugation groove in the outer layer (3).

5. An end cap according to any one of the preceding claims, **characterized in that** the sleeve (8) is made of resilient material and has at least partly smaller inner diameter than the outer diameter of the flow pipe to be mounted inside the sleeve (8), whereby the resilience of the sleeve (8) causes it to tighten around the flow pipe (1) such that the sleeve (8) and the flow pipe (1) are set tightly against one another.

6. An end cap according to any one of the preceding claims, **characterized in that** the sleeve (8) is made conical such that it tapers towards the end.

7. An end cap according to any one of the preceding claims, **characterized in that** the sleeve (8) is stepped to allow the end cap (4) to be arranged in connection with flow pipes (1) of various sizes and the sleeve (8) to be cut such that it seals against the flow pipe (1).

8. An end cap according to any one of the preceding claims, **characterized in that** the end cap is at least partly made of thermo-elastic material.

9. An end cap according to claim 8, **characterized in that** the end cap is at least partly made of ethylene/propylene/diene.

10. An end cap according to claim 9, **characterized in that** the end cap (4) is substantially entirely made of ethylene/propylene/diene.

## Patentansprüche

1. Endkappe für ein Rohrelement mit mindestens einem Strömungsrohr (1), einer außen an dem Strömungsrohr (1) angeordneten Isolierung (2) und einer außen an der Isolierung (2) angeordneten Außenschicht (3), wobei die Endkappe (4) an einem Ende des Rohrelements anbringbar ist und die Endkappe (4) eine an der Außenschicht (3) anliegende Seitenwand (10), eine an der Isolierung (2) anliegende Vorderfläche (9) und mindestens eine Hülse (8) in der Vorderfläche (9) aufweist und das Strömungsrohr (1) durch die Hülse verlaufend angeordnet ist,
**dadurch gekennzeichnet, dass**
mindestens ein Faltenbalg (5a,5b) an der Vorderfläche (9) der Endkappe (4) ausgebildet ist, um die Vorderfläche (9) elastisch zu gestalten.

2. Endkappe nach Anspruch 1, **dadurch gekennzeichnet, dass** die Endkappe (4) mindestens zwei Hülsen (8) aufweist und zwischen den Hülsen (8) ein Faltenbalg (5b) ausgebildet ist.

3. Endkappe nach Anspruch 1 oder 2, **dadurch gekennzeichnet, dass** mindestens ein Faltenbalg (5a) an dem Außenrand der Vorderfläche (9) der Endkappe (4) ausgebildet ist.

4. Endkappe nach einem der vorhergehenden Ansprüche, **dadurch gekennzeichnet, dass** eine Einbuchtung (7) auf den Innenfläche der Seitenwand (10) der Endkappe (4) ausgebildet ist, wobei die Endkappe zur Verwendung in Zusammenhang mit einem Rohrelement vorgesehen ist, das mit einer gewellten Außenschicht (3) versehen ist, und die Seitenwand (10) elastisch ausgebildet ist, so dass die Einbuchtung (7) in einer Wellennut in der Außenschicht (3) angeordnet ist.

5. Endkappe nach einem der vorhergehenden Ansprüche, **dadurch gekennzeichnet, dass** die Hülse (8) aus elastischem Material gefertigt ist und einen Innendurchmesser hat, der zumindest teilweise kleiner ist als der Außendurchmesser des in der Hülse (8) anzuordnenden Strömungsrohrs, wobei die Elastizität der Hülse (8) bewirkt, dass sich diese derart um das Strömungsrohr (1) zusammenzieht, dass die Hülse (8) und das Strömungsrohr (1) dicht aneinander liegen.

6. Endkappe nach einem der vorhergehenden Ansprüche, **dadurch gekennzeichnet, dass** die Hülse (8) derart konisch ausgebildet ist, dass sie sich in Richtung des Endes verjüngt.

7. Endkappe nach einem der vorhergehenden Ansprüche, **dadurch gekennzeichnet, dass** die Hülse (8) gestuft ist, so dass die Endkappe (4) für Strömungsrohre (1) unterschiedlicher Größen vorgesehen sein kann und die Hülse (8) derart abgeschnitten werden kann, dass sie das Strömungsrohr (1) abdichtet.

8. Endkappe nach einem der vorhergehenden Ansprüche, **dadurch gekennzeichnet, dass** die Endkappe zumindest teilweise aus thermoelastischem Material gefertigt ist.

9. Endkappe nach Anspruch 8, **dadurch gekennzeichnet, dass** die Endkappe zumindest teilweise aus Ethylen/Propylen/Dien gefertigt ist.

10. Endkappe nach Anspruch 9, **dadurch gekennzeichnet**, das die Endkappe (4) im wesentlichen vollständig aus Ethylen/Propylen/Dien gefertigt ist.

## Revendications

1. Embout d'extrémité pour élément de tuyau comprenant au moins un tuyau d'écoulement (1), un isolant (2) aménagé sur la partie externe du tuyau d'écoulement (1) et une couche externe (3) aménagée sur la partie externe de l'isolant (2), lequel embout d'extrémité (4) doit être placé à une extrémité de l'élément de tuyau, l'embout d'extrémité (4) comprenant une paroi latérale (10) à aménager contre la couche externe (3), une surface frontale (9) à aménager contre l'isolant (2) et, sur la surface frontale (9), au moins un manchon (8) à travers lequel le tuyau d'écoulement (1) doit être aménagé, **caractérisé en ce qu'**au moins un soufflet (5a, 5b) est formé sur la surface frontale (9) de l'embout obturateur (4) pour rendre la surface frontale (9) élastique.

2. Embout d'extrémité selon la revendication 1, **caractérisé en ce que** l'embout d'extrémité (4) comprend au moins deux manchons (8) et, entre les manchons (8), est formé un soufflet (5b).

3. Embout d'extrémité selon la revendication 1 ou 2, **caractérisé en ce qu'**au moins un soufflet (5a) est formé sur le bord externe de la surface frontale (9) de l'embout d'extrémité (4).

4. Embout d'extrémité selon l'une quelconque des revendications précédentes, **caractérisé en ce qu'**un renflement (7) est formé sur la surface interne de la paroi latérale (10) de l'embout d'extrémité (4), l'embout d'extrémité étant conçu pour être utilisé en rapport avec un élément de tuyau muni d'une couche externe ondulée (3) et la paroi latérale (10) étant rendue élastique pour pouvoir aménager le renflement (7) dans une rainure d'ondulation dans la couche externe (3).

5. Embout d'extrémité selon l'une quelconque des revendications précédentes, **caractérisé en ce que** le manchon (8) est constitué d'un matériau élastique et a, au moins en partie, un diamètre interne plus petit que le diamètre externe du tuyau d'écoulement à monter à l'intérieur du manchon (8), si bien que l'élasticité du manchon (8) l'emmène à se serrer autour du tuyau d'écoulement (1) de sorte que le manchon (8) et le tuyau d'écoulement (1) soient ajustés étroitement l'un contre l'autre.

6. Embout d'extrémité selon l'une quelconque des revendications précédentes, **caractérisé en ce que** le manchon (8) est de forme conique de sorte qu'il s'amincisse vers l'extrémité.

7. Embout d'extrémité selon l'une quelconque des revendications précédentes, **caractérisé en ce que** le manchon (8) est formé en gradins pour pouvoir aménager l'embout obturateur (4) en liaison avec des tuyaux d'écoulement (1) de tailles variables et découper le manchon (8) de manière qu'il se scelle hermétiquement contre le tuyau d'écoulement (1).

8. Embout d'extrémité selon l'une quelconque des revendications précédentes, **caractérisé en ce que** l'embout obturateur est au moins en partie fabriqué en matériau thermoélastique.

9. Embout d'extrémité selon la revendication 8, **caractérisé en ce que** l'embout d'extrémité est au moins en partie fabriqué en éthylène/propylène/diène.

10. Embout d'extrémité selon la revendication 9, **caractérisé en ce que** l'embout d'extrémité (4) est sensiblement fabriqué entièrement en éthylène/propylène/diène.
